# EUROPEAN PATENT APPLICATION

(11) **EP 4 818 828 A1**
(43) Date of publication of application: **07.10.2026**
(21) Application number: 25188865.7
(22) Date of filing: 10.07.2025
(51) Int. Cl.: G05B 15/02, H04L 12/28

(54) **GENERATING ACTIONABLE INSIGHTS FROM SMART HOME EVENT DATA**

(30) Priority: 31.03.2025 US 202563780826 P; 31.03.2025 US 202563780987 P
(71) Applicant: GOOGLE LLC, Mountain View CA 94043 (US)
(72) Inventor: Paiz, Ignacio Robles, Kent (US); Strods, Raymond Stepkans, Las Vegas (US); Griffiths, Erin Rebecca, Santa Clara (US); Cutbill, Adam, Menlo Park (US); Kamireddy, Suneil, San Francisco (US)
(74) Representative: Maikowski & Ninnemann Patentanwälte Partnerschaft mbB

(57) **Abstract**

This document describes systems and techniques directed at generating actionable insights from smart home event data. Various examples are described herein, including a method, the method including generating, by one or more home surveillance sensors, home data. The method further includes receiving, by a machine-learned (ML) model, the home data and generating, by the ML model, one or more correlations based on the home data. The method further includes generating, based on the one or more correlations, a home action and configuring, by one or more processors, the home action for output to a user.

## Description

### BACKGROUND

Home automation, surveillance, and monitoring services present a user with a variety of data. For example, a doorbell camera can show package deliveries, guests arriving, neighbourhood animals, or passing cars. Not all data is relevant or useful to the user, however. In the example of video doorbell data, things like the comings and goings of neighbourhood animals and passing cars may not be interesting or useful to the user. Some combinations of otherwise disparate data may be relevant, such as a weather report and an item left outside (e.g., a package left outside when the weather indicates it might rain). Thus, while these services can present a glut of data to the user, some of this data is useful, some of it is not, and some is useful when combined with other data. In addition, there may be correlations that are relevant to the user within the data. Parsing all of this home data may be daunting to the user, if not prohibitive to the point of being functionally impractical.

### SUMMARY

Home Agent Insights (referred to simply as "insights") bring generative artificial intelligence (GenAI) to the home. Insights are the product of using raw events to discover new information that is relevant to the user. These insights can, for example, come from discovered trends, anomalies in patterns, immediate dangers, and rare events, as well as situations reported by users on their own (e.g., "there's mold in the bathroom")

Insights can use a large language model (LLM) to generate insights. Agents (e.g., electronic devices) use LLMs to mimic reasoning, tools to interact with external software, memory to track past sessions, and reflection to verify their work, all to autonomously accomplish a goal. Aside from improving quality by reasoning step-by-step, agents bring modularity, letting components change without needing to rebuild a full system. For example, when changing a command syntax, it would be preferable to reuse command ranking and selection logic to simply update the syntax generation step. Similarly, as new artificial intelligence (AI) capabilities are added, it may be advantageous to immediately leverage the new capabilities as a tool rather than to make architectural changes.

This document describes systems and techniques directed at generating actionable insights from smart home event data. Various examples are described herein, including a method, the method including generating, by one or more home surveillance sensors, home data. The method further includes receiving, by a machine-learned (ML) model, the home data and generating, by the ML model, one or more correlations based on the home data. The method further includes generating, based on the one or more correlations, a home action and configuring, by one or more processors, the home action for output to a user.

Additionally, an electronic device is disclosed, the electronic device including one or more processors and a memory. The memory stores instructions that, when accessed by the one or more processors, cause the one or more processors to execute the method described. Additionally, a non-transitory, computer-readable medium is disclosed, the non-transitory, computer-readable medium storing instructions that, when accessed by one or more processors, cause the one or more processors to execute the method described. Additionally, a computer programming product is disclosed. The computer programming product stores instructions that, when accessed by one or more processors, cause the one or more processors to perform the method described.

This Summary is provided to introduce simplified concepts for generating actionable insights from smart home event data, which is further described below in the Detailed Description and is illustrated in the Drawings. This Summary is intended neither to identify essential features of the claimed subject matter nor for use in determining the scope of the claimed subject matter.

### BRIEF DESCRIPTION OF THE DRAWINGS

The details of one or more aspects of systems and techniques for generating actionable insights from smart home event data are described in this document with reference to the following drawings:
FIG. 1 illustrates an example home environment in which generating actionable insights from smart home event data can be implemented;
FIG. 2 illustrates an example user environment in which generating actionable insights from smart home event data can be implemented;
FIG. 3 illustrates an example user device in which generating actionable insights from smart home event data can be implemented;
FIG. 4 illustrates a first example user interface (UI) in which generating actionable insights from smart home event data can be implemented;
FIG. 5 illustrates a second example UI in which generating actionable insights from smart home event data can be implemented;
FIG. 6 illustrates an example implementation for generating actionable insights from smart home event data;
FIG. 7 illustrates an example of a machine-learning trainer for training a machine-learned (ML) model, in accordance with one or more aspects of this disclosure;
FIG. 8 illustrates an example LLM trainer for generating actionable insights from smart home event data;
FIG. 9 illustrates an example of prompt engineering an LLM, in accordance with one or more aspects of this disclosure;
FIG. 10 illustrates an example of low-rank adaptation (LoRA) training for an LLM, in accordance with one or more aspects of this disclosure;
FIG. 11 illustrates an example method for generating actionable insights from smart home event data;
FIG. 12 illustrates another example method for generating actionable insights from smart home event data; and
FIG. 13 illustrates another example method for generating actionable insights from smart home event data.

The use of same numbers in different instances may indicate similar features or components.

### DETAILED DESCRIPTION

### Overview

Home Agent Insights (referred to simply as "insights") are the product of using raw events to discover new information that is relevant to a user. Insights are not just a collection of raw events, but new information derived from them that highlights patterns, behaviors, and data that are not immediately evident from just the collection of raw events. Examples of insights include "by shifting the energy usage to an off-peak period, we saved approximately $2.30 today," "the kitchen light is frequently left on at night between 3am and 6am," "last week it took an average of 7h to retrieve packages from the front door," "we've seen an unfamiliar face at the garage door for the past 3 nights at 4am," "we've detected a degraded performance in the furnace for the past 8 days," "your battery performance is poor, you might want to consider using X setting," or "you left your home 30 minutes ago, but the kitchen light is still on and the front door is unlocked."

This document describes systems and techniques directed at generating actionable insights from smart home event data. Various examples are described herein, including a method that includes generating, by one or more home surveillance sensors, home data. The method further includes receiving, by a machine-learned (ML) model, the home data and generating, by the ML model, one or more correlations based on the home data. The method further includes generating, based on the one or more correlations, a home action and configuring, by one or more processors, the home action for output to a user.

An electronic device implementing the generation of actionable insights from smart home event data can reason about and understand the near infinite space of home situations. By using an LLM and/or LLM agent to reason about home situations, the electronic device can handle situations that it has not been explicitly trained on. It can also incorporate world knowledge, for example by training on the internet, to understand the relationship between issues and device capabilities. For example, if an insight is a detection of a darker-than-desired condition at one or more areas of the home, a proposed action can be to turn up the brightness on relevant lights that support such an action. Rather than this sort of functionality needing to be coded or defined a priori, actionable insights allow for dynamic and novel capabilities derived from, for example, the home data and capabilities of connected devices. The electronic device, in aspects, understands the capabilities of the devices to make use of a diverse set of action types based on the capabilities. Using examples and formatting context for LLM readability, models are able to effectively understand correlations (e.g., insights) in the smart home event data. Additionally, the electronic device can incorporate a new capability of a new device that has not been hard-coded, trained, or otherwise experienced prior by the electronic device.

Insights can be presented to a user automatically, at the request of the user, or in other ways. For example, consider the user interacting with a home application, in which generating actionable insights from smart home event data is implemented. The user can ask the application (e.g., a text interface, an LLM agent instantiation) to analyze heating, ventilation, and air conditioning (HVAC) optimization potential. The application can use the smart home event data (e.g., HVAC usage statistics and prevailing weather patterns during time stamps related to the HVAC usage statistics). The application can, while using the LLM agent, generate a response advising the user that the weather is warm enough that HVAC heating can be turned off for 6 hours during normal sleep time (e.g., sleep time derived from the home data in the form of motion detection data from inside the home).

The unprocessed data can be home-related data. For example, the unprocessed data can be images from a home surveillance camera or video doorbell. The unprocessed data may also be from smart home monitoring devices, such as smart thermostat data (e.g., HVAC usage statistics, weather-related data, etc.), irrigation or other plumbing-related monitoring data, or door status data (e.g., a lock status, an open or closed status, etc.). In some examples, the unprocessed data can relate to facial or other recognition or to smart appliances (e.g., dishwasher status, refrigerator contents, etc.). Consider a smart lock on a front door of a home and a smart doorbell. The smart home event data can include a lock status (e.g., unlocked, locked) with time stamps and doorbell video events with time stamps. An example insight can be identifying that a user has left the home (via the doorbell video data) and that the lock is not locked (via the lock data), which can be presented to the user (e.g., on a mobile device of the user, on a smart car interface).

### Operating Environment

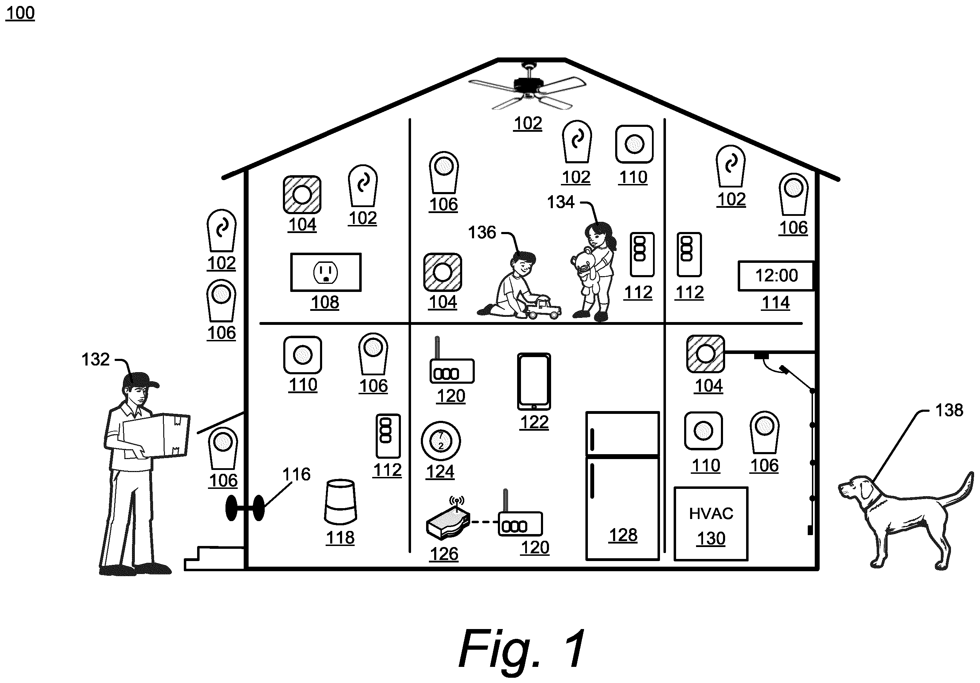

FIG. 1 illustrates an example smart home environment 100 in which generating actionable insights from smart home event data can be implemented. Generally, the home environment 100 includes a network (e.g. a home area network (HAN)) implemented as part of a home or other type of structure with any number of network-connected devices that are configured for communication in a wireless network. For example, the environment 100 includes smart fans 102, smart plugs 104, smart cameras 106, a smart outlet 108, smart home controllers 110, smart sensors 112, a smart alarm clock 114, a smart door lock system 116, a smart home hub device 118, border routers 120, a user device 122, a smart thermostat 124, an access point 126 (e.g., a smart networking device), a smart refrigerator 128, and a heating, ventilation, and air conditioning (HVAC) system 130. Any number of these network-connected devices can be implemented for wireless interconnection to wirelessly communicate and interact with each other. The network-connected devices may be modular, intelligent, multi-sensing, wireless devices that can integrate seamlessly with each other and/or a central server or system to provide any variety of useful implementations. The network-connected devices may also be configured to communicate via a network, which may include a wireless mesh network, a Wi-Fi^{™} network, or both.

The network-connected devices can further include, as non-limiting examples, hazard detectors (e.g., for smoke and/or carbon monoxide), cameras (e.g., indoor and outdoor), lighting units (e.g., indoor and outdoor), sensors and detectors (e.g., ambient light detectors, occupancy sensors, doorbells, and door lock systems), connected appliances and/or controlled systems (e.g., stoves, ovens, washers, dryers, air conditioners, pool heaters, irrigation systems, and security systems), electronic and computing devices (e.g., televisions, entertainment systems, computers, speakers, intercom systems, garage-door openers, ceiling fans, and control panels), and any other types of network-connected devices that are implemented inside and/or outside of a structure (e.g., in the home environment 100).

Consider the case where the home environment 100 includes a delivery person 132. The smart cameras 106 or the smart sensors 112 may identify that the delivery person 132 has arrived through facial recognition or from a proximity sensor. Smart home event data may include the identification of the delivery person 132, a lock status of the smart door lock system 116, and occupancy data indicating that a first child 134 and a second child 136 are inside the home environment 100. An example insight (e.g., correlation) can be presented to a user (e.g., a parent outside the home) indicating that a door is not locked and the first child 134 and the second child 136 are home alone. A potential action derived from the insight may be asking the user if they want to lock the door. In some examples, the actionable insight is presented on the user device 122.

The home environment 100 may also include a dog 138. The dog 138 may have been left outside by the first child 134, and smart home event data may include identification of the dog 138, the outside temperature from an outdoor thermometer, and a duration of time the dog 138 has been outside based on smart camera 106 time stamps. An example insight can indicate to a user that the dog 138 has been outside for 35 minutes in 93°F heat. A potential action derived from the insight may be asking the user if they want to open a garage door or unlock a pet door to let the dog 138 inside.

The home environment 100 may also include the smart alarm clock 114. The smart alarm clock 114 may be located in a user's bedroom, and smart home event data may include a sleep schedule derived from smart sensors 112, calendar data of the user, ambient light levels from a window-facing light detector, and tracking data from a wearable device (e.g., a smart watch). An example insight can indicate to the user that their average sleep time over the past week has dropped below six hours due to frequent late-night motion events. A potential action derived from the insight may be asking the user if they want to shift an alarm time 30 minutes later and enable a "wind-down" lighting mode in the evening to promote better sleep.

The home environment 100 may also include the smart refrigerator 128. The smart refrigerator 128 may track food inventory through weight sensors, and smart home event data may include a frequency of door openings, interior temperature levels, and product expiration data. An example insight can indicate to a user that milk is nearing expiration, suggesting that it is likely to spoil soon. A potential action derived from the insight may be asking the user if they want to add milk to their grocery list. In another example, the potential action derived from the insight may be asking the user if they want to set a reminder to use the milk in the next 24 hours.

The home environment 100 may also include the smart plug 104. The smart plug 104 may control power to various appliances (e.g., HVAC 130, the smart refrigerator 128), and smart home event data may include plug activation history, estimated energy usage, and time-of-day patterns. An example insight can indicate to a user that a space heater plugged into the smart plug 104 has remained on for five continuous hours while no motion was detected in a room. A potential action derived from the insight may be asking the user if they want to turn off the smart plug 104. In another example, the actionable insight can ask the user if they want to set an automatic shutoff rule for the space heater or similar devices when the room is unoccupied.

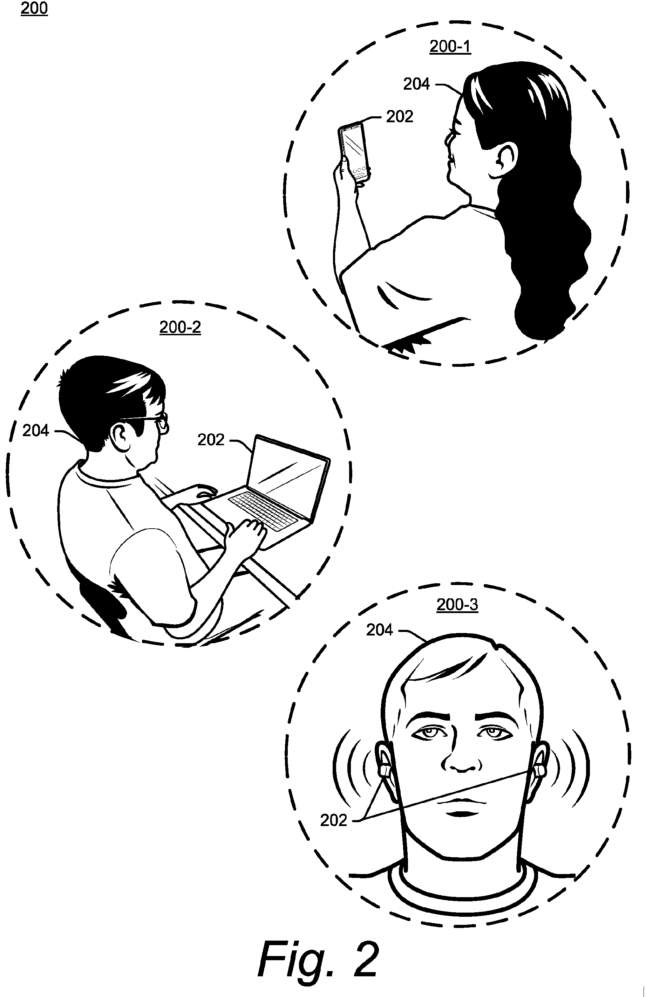

FIG. 2 illustrates an example user environment 200 in which generating actionable insights from smart home event data can be implemented. In a first example user environment 200-1, a user device 202 may be a mobile phone held by a user 204. In a second example user environment 200-2, the user device 202 may be a laptop in use by the user 204. In a third example user environment 200-3, the user device 202 may be wired earbuds in the ears of the user 204. The user device 202 may have an insights service located on a memory of the user device 202.

The insights service can gather data (home graph devices, current device state, historical events, weather, etc.) from the data sources and generate an insight. In some examples, it is possible that no relevant insights are generated, and the process ends here. In examples where an insight is generated, a surface can be selected to provide the insight to the user 204 (e.g., the user device 202). Potential actions for the insight can be selected by contacting an action selection service. After generation of the insight, the insight, the surface, and/or the actions can be made persistent (e.g., stored in a database) for bookkeeping and/or later surfacing through a pull request. If the insight needs to be surfaced to the user 204, for example, a delivery date can be scheduled through a scheduler, or the insight can be pushed immediately to the user 204. Immediate insights can directly call a surface router to push the insight to the selected surface. The insight may be published to a home event channel.

For example, the user 204 accesses a certain page on the user device 202 requiring a current insight, such as by opening a thermostat device controller that displays an insight related to general energy usage of that specific device. An insights selector may determine if any previously generated insights fulfill the request criteria and retrieve a relevant insight(s) from the previously generated insights from storage. An insights selector may include existing insights that have opted in to reactive surfacing. The insights selector determines if an insight can be generated for the request and invites the insights service that can act as an insights generator. The insights service can gather all necessary data from the external data sources and generate insights. For example, the insights service collects sensor data (e.g., room temperature, fridge inventory) and external data (e.g., weather forecasts, grocery delivery services) from a user's smart home (e.g., environment 100 of FIG. 1). Based on this input, the insights service generates insights about the user's fresh produce consumption in warmer months. Additionally, the insights service may not generate relevant insights. The process may end and the insights service may push a message of "no insight found" to the user. For example, the insights service collects appliance usage data, occupancy patterns, and local air quality data to evaluate the user's smart home. After analyzing the inputs, the insights service may determine that there are no relevant insights to send to the user and may stop the process of collecting data.

When an insight is generated, the insights service can determine an appropriate action. Additionally or alternately, the insights selector can recommend actions based on the insight. After the generation of the insight, in some examples, a check for any modifications to text of the insight can occur to make it appropriate to the request. This check can be cosmetic only. Newly generated insights can be stored and/or updated with use information for bookkeeping purposes.

### Example Device

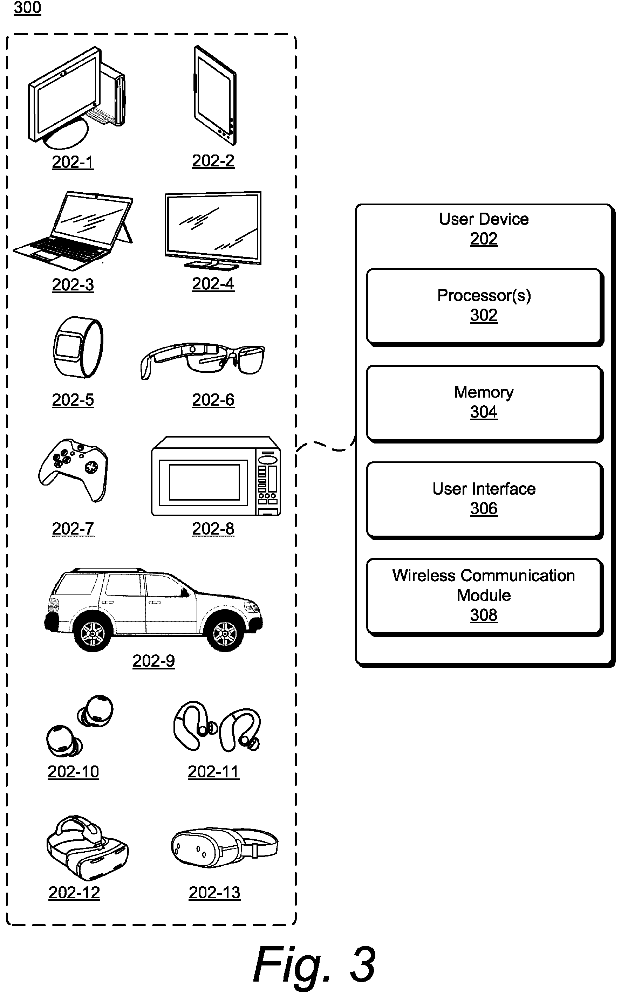

FIG. 3 illustrates the user device 202 in an example environment 300 in which generating actionable insights from smart home event data can be implemented. The user device 202 is illustrated with various non-limiting example devices, including a desktop computer 202-1, a tablet 202-2, a laptop 202-3, a television 202-4, a smart watch 202-5, smart glasses 202-6, a gaming system 202-7, a smart appliance 202-8, a vehicle 202-9, earbuds 202-10 (e.g., true-wireless earbuds, wired earbuds), hearing aids 202-11, a virtual-reality (VR) headset 202-12, and an augmented-reality (AR) headset 202-13. Other devices may also be used (e.g., a home service device, a smart speaker, a smart water monitor, a baby monitor, a Wi-Fi^{™} router, a drone, a trackpad, a drawing pad, a netbook, an e-reader, a home automation and control system, a wall display, or another home appliance). Note that the user device 202 can be wearable, non-wearable but mobile, or relatively immobile (e.g., desktops and appliances).

The user device 202 may include one or more processors 302 and a memory 304 (e.g., non-transitory computer-readable medium). In some examples, the memory 304 is part of a computer-programming product. The one or more processors 302 may include any suitable single-core or multi-core processor (e.g., an application processor (AP), a digital-signal processor (DSP), a central processing unit (CPU), a graphics processing unit (GPU)). The memory 304 can include memory media and/or non-transitory storage media. An operating system (not shown) embodied as computer-readable instructions on the memory 304 can be executed by the one or more processors 302.

The user device 202 can additionally include a user interface 306. In some examples, the user interface 306 is a display in which the user device 202 can present actionable insights (e.g., notifications) from smart home event data. The user device 202 may also include a wireless communication module 308 for communicating data over a wireless network. For example, the wireless communication module 308 communicates data over a wireless local-area network (WLAN), Bluetooth^{™}, a cellular network (e.g., 4G, 5G), a satellite communication network, a mesh network, the Internet, and the like.

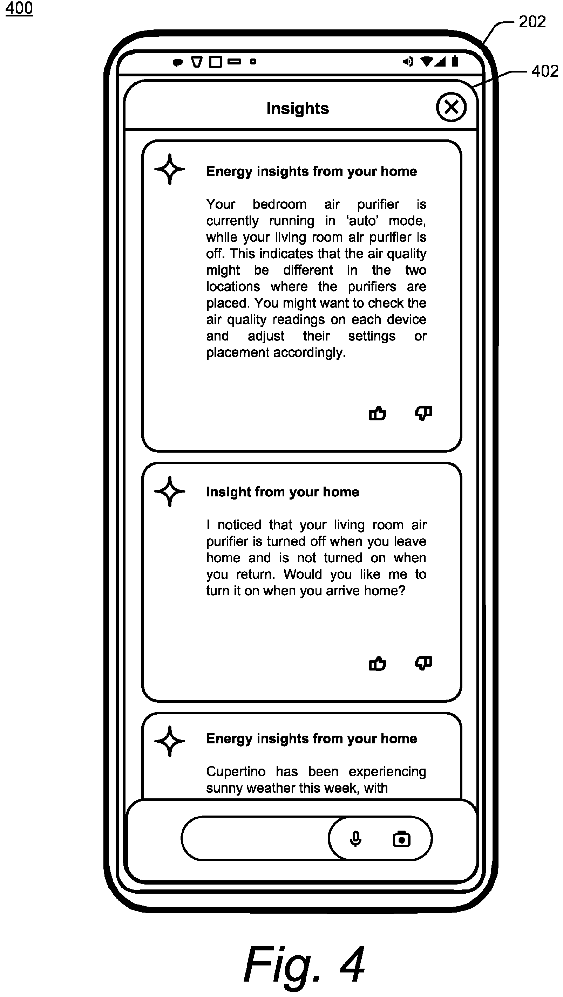

FIG. 4 illustrates a first example UI 400 in which generating actionable insights from smart home event data can be implemented. The user device 202 may present a suggestion box 402 to a user (e.g., the user 204 of FIG. 2). As illustrated in FIG. 4, the suggestion box 402 includes several insights from smart home event data. The suggestion box 402 may be an inbox in an application (e.g., Google Home App (GHA)). The insights may be requested by the user and/or automatically presented by a large language model (LLM). Additionally, the insights may be user-generated templates filled in with smart home event data. Further, the insights may be solely generated from the LLM.

In aspects, insights are the product of using raw events (e.g., smart home event data) to discover new information that is relevant to the user. Insights may represent more than a collection of raw events, instead including new information derived from the raw events that highlights patterns, behaviors, and data (e.g., correlations) that are not immediately evident from just the collection of raw events. Examples of insights include "by shifting the energy usage to an off-peak period, we saved approximately $2.30 today," "the kitchen light is frequently left on at night between 3am and 6am," "last week it took an average of 7h to retrieve packages from the front door," and "we've seen an unfamiliar face at the garage door for the past 3 nights at 4am."

Insights may be generated based on a variety of triggers, including, but not limited to, real-time events, period events, app requests, or user queries. The smart home event data used to generate insights can be continually evolving as more types of insights are added. In some examples, in order to see longer-term patterns in the data, lookback windows (e.g., 1 week, 60 days) can be used for historical home event data. An insights service can generate insights based on triggers. A first example trigger is a periodic trigger, where a periodic job (e.g., every day) triggers the generation of insights and/or insight actions. A second example trigger is an events trigger, where real-time events (e.g. "the light turned on," "the structure went into away mode") trigger the generation of the insights and/or the insight actions. A third example trigger is an app request trigger, where a user entering a specific page triggers the generation of the insights and/or the insight actions. A fourth example trigger is a user query trigger, where a specific user query triggers the generation of the insights and/or the insight actions.

Insights may be useful when new information (e.g., correlations) is discovered about the user's smart home environment (e.g., home environment 100 of FIG. 1) and may have an associated action. The action may be requested by a user and/or automated through the user device 202. Examples of insights and their potential actions include "we've detected a degraded performance in the furnace for the past eight days; contact an HVAC technician to help diagnose if there is an issue with your furnace" and "by shifting the energy usage to an off-peak period, we saved approximately $2.30 today... set up a routine to further increase savings for those appliances that can be turned off."

Users can receive insights about their home environment through various avenues. A first avenue is a proactive approach ("push" approach), where the user is presented with an insight and/or an insight action without a specific user request. This proactive approach may include pushing the insight to the user in an inbox (e.g., the suggestion box 402) or as a notification or loading the insight whenever the user selects a specific page. Additionally, the proactive approach may be scheduled by the insights service (e.g., in the future). A second avenue is a reactive approach ("pull" approach), where the user requests an insight from the user device 202. For example, the user can ask, "How long is my home typically in away mode?" This reactive approach may include both a proactive app request trigger and a reactive user query trigger. Pull requests (e.g., for app requests, user queries) can use an interface for an LLM agent. This may allow requests to leverage LLM agent infrastructure for traffic control, logging, or toxicity checks. The insights service can implement a process query remote procedure call (RPC) to receive requests. For example, a reactive request or a reactive response can be passed as an additional parameter for reactive requests. A user query may be passed as part of a process query protocol.

Insights can be scheduled for surfacing using an insights scheduler. The insights scheduler may provide a configurable RPC for scheduling insights. When an insight is scheduled for surfacing, the insights scheduler can call an insights RPC on the insights service. Insights received by the insights RPC, for example, can be routed to all specified surfaces provided throttling rules are met. If an insight cannot be surfaced due to throttling, that insight can be dropped or rescheduled on the insights scheduler.

The potential actions for the insight may be selected by passing the insight text to an action generator. After generation of the insight, according to some examples, the insight, the surface, and/or the actions can be made persistent (e.g., stored in a database) for bookkeeping and/or later surfacing through a pull request. When the insight is surfaced to the user by push (e.g., notification or inbox), there may be a scheduled delivery date through a scheduler. When the time to deliver an insight comes, the insights scheduler can contact the insights service to push the insight to the right surface. An insights database may contain information for use in tracking the generated insights or a time they were scheduled. This information can be used to create dashboards and visualize information and metrics of a current state of insights, as well as to prevent publishing duplicated insights to users through use of stored insights.

Insights can be displayed to the user through multiple surfaces (e.g., GHA inbox, push notifications, helpful interruptions, alerts on a desired surface of a calling client, etc.). Additionally, some examples allow for annotation of each insight with domains that can inform what the insight is about. For example, the insight "we detected you had a poor sleep score last night...your sleep score can improve if you lower your sleep temperature by 1°F" belongs to an energy domain or a health domain.

According to some examples, the insights service does not generate the insight but can attach an action to the insight upon request and determine surfacing for the insight. By surfacing the insights through pull mechanisms to a home application, other insights in the service can be surfaced in the same way. In some examples, this mechanism can be added to allow insights already created in other services (e.g., Wi-Fi^{™}, thermostats) to take advantage of the insights service without requiring their generation to be ported to the service.

Generated insights can be compared against previously generated insights that have been stored in the database. If these new insights are duplicates and have already been surfaced, the new insights can be stored and not surfaced. The cadence of surfacing duplicates may be adjusted based on a type of the insights. For example, an insight of "You just left home, and the door is unlocked" might be surfaced multiple times as appropriate, but "You leave the lights on at night" might only be surfaced once or once in a long period (e.g., a month, a quarter). A cooldown period can be specific to the insight.

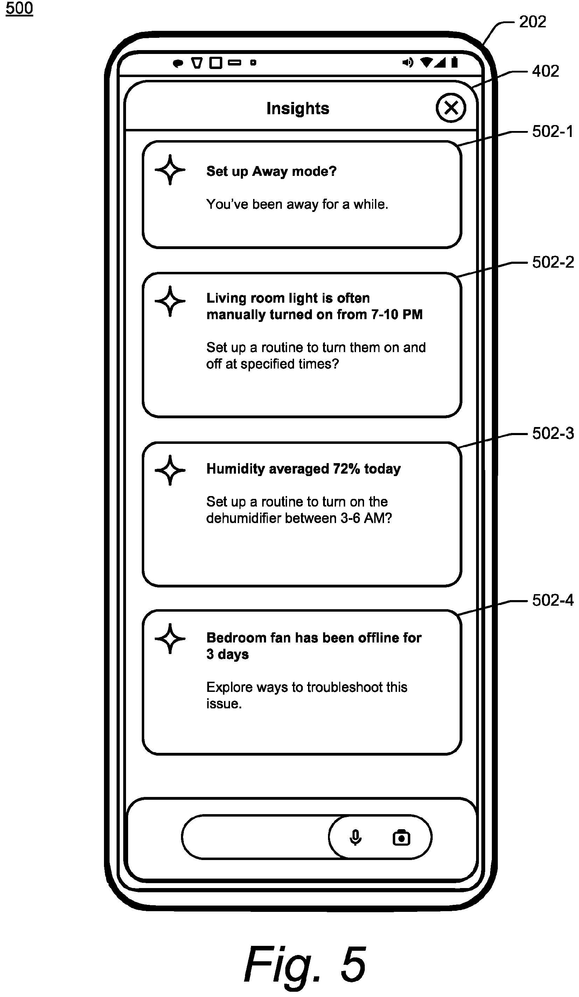

FIG. 5 illustrates a second example UI 500 in which generating actionable insights from smart home event data can be implemented. The user device 202 can present the suggestion box 402 to a user (e.g., the user 204 of FIG. 2). As illustrated in FIG. 5, the suggestion box 402 includes several insights 502. A first insight 502-1 may ask the user if they want to set up an "Away" mode. The user device 202 may collect smart home event data from a smart home indicating that the user has been out of the smart home for an extended period of time. Based on a correlation of the smart home event data, the user device 202 can send the first insight 502-1 as a notification to the user and can present the first insight 502-1 on a user interface (e.g., the user interface 306 of FIG. 3) of the user device 202. A second insight 502-2 may alert the user that a living room light is often manually turned on from the hours of 7pm to 10pm. Based on this smart home event data that the user device 202 has collected, the second insight 502-2 can ask the user if they want to set up a routine to automatically turn the lights on and/or off at specific hours of the day.

In aspects, a third insight 502-3 in the suggestion box 402 alerts the user about the humidity levels of the day. Based on the smart home event data (e.g., the humidity level), the third insight 502-3 may ask the user if they want to set up a routine to turn on their dehumidifier between the hours of 3am and 6am. The user device 202 may use correlations between the user's sleep schedule and the user's normal use of their humidifier to determine when the most useful time to turn on the dehumidifier would be. In aspects, a fourth insight 502-4 tells the user that their smart ceiling fan in their bedroom has been offline for three days. The fourth insight 502-4 may provide an action for the user that allows them to explore options to troubleshoot the smart ceiling fan issue.

A logic to generate the insights 502 can be shared between all the components (e.g., the one or more processors 302 and the memory 304 of FIG. 3) in the design. This may allow insights generated from any trigger to be surfaced from storage or re-generated for a pull request (e.g., triggers, app requests, user queries). An event-triggered insight normally generated based on the household's bedtime estimate (e.g., "Looks like you're headed to bed and the front door is still unlocked. Do you want to...") can be generated reactively based on a query of the user. For example, a user query of "I'm headed to bed, anything I should know?" can generate an insight and insight action of "The front door is still unlocked. Do you want to lock the front door?" An LLM can be used to modify text of the insight to be appropriate for different approaches (e.g., the proactive approach, the reactive approach). An app-based pull request (e.g., a request for an insight related to a controller) can be responded to with a previously generated insight from any of the triggers. For example, an insight previously generated for a user request (e.g., a user query of "How often did my HVAC run while I was on vacation last week" resulting in an insight "Your HVAC ran for 5 hours while you were on vacation last week") might be resurfaced in an app request (e.g., the suggestion box 402 now shows the insight "Your HVAC ran for 5 hours while you were on vacation last week").

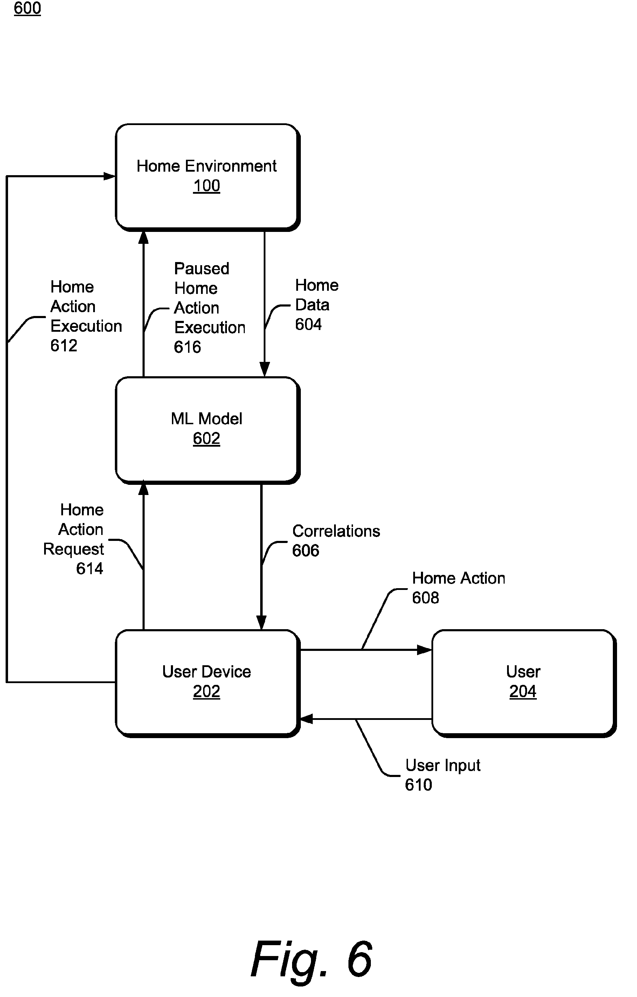

FIG. 6 illustrates an example implementation 600 for generating actionable insights from smart home data. The home environment 100 (described with respect to FIG. 1) interacts with a machine-learned (ML) model 602 (e.g., an LLM) by sending home data 604 (e.g., smart home event data) to the ML model 602. Based on the home data 604, the ML model 602 generates one or more correlations 606 and outputs them to the user device 202 (described with respect to FIGs. 2 and 3). In some examples, the one or more correlations 606 include one or more of a time correlation, an object detection correlation, an event correlation, a home device state correlation, a weather correlation, a pattern correlation, a historical correlation, a category correlation, and an energy usage correlation. For example, the one or more correlations 606 are between at least two or more different devices, and the one or more correlations 606 are time correlations (e.g., two seconds, one microsecond). The user device 202 may trigger the generation of the one or more correlations 606.

The user device 202 may configure a home action 608 based on the one or more correlations 606 and may output the home action 608 to the user 204 (described with respect to FIG. 2). In aspects, the one or more processors 302 (described with respect to FIG. 3) of the user device 202 configure the home action 608 for output to the user 204. The user 204 may send a user input 610 to the user device 202. The user input 610 may be a request to execute the home action 608. In turn, the user device 202 may send a home action execution 612 to the home environment 100. The user device 202 may also send a home action request 614 to the ML model 602, which may send a paused home action execution 616 to the home environment 100.

### Machine Learning

An ML model, as discussed in this disclosure, refers to a computer model that has been trained using one or more machine-learning techniques. In general, this training may be done by providing training inputs to one or more training models, which in turn may provide an output. The output may be in the form of a prediction, a confidence score, or other probability-based metrics.

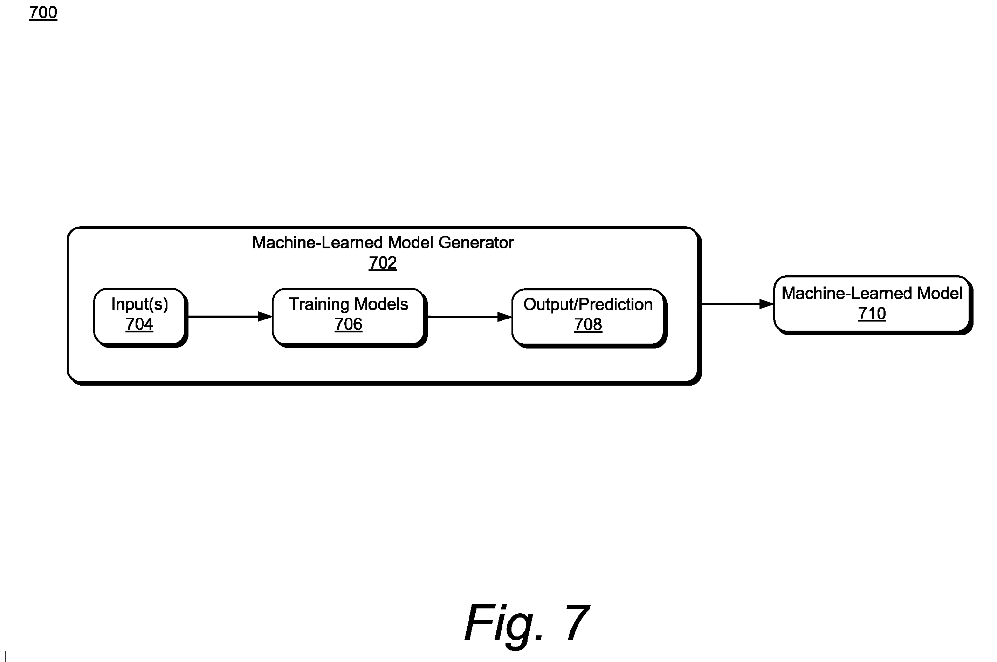

FIG. 7 illustrates an example machine-learning trainer 700 for training an ML model, in accordance with one or more aspects of this disclosure. An ML model generator 702 may comprise training elements in the form of inputs 704, training models 706, and outputs 708 and may be used to generate an ML model 710. The inputs 704 may be training data. For example, the training data 704 can include smart device data such as an on/off status of an appliance, thermostat readings, motion sensor data, or a brightness of a smart light. The training data 704 may also include user behavior and preferences such as a daily thermostat schedule or a manual override of a light automation. In other examples, the training data 704 includes environmental data, contextual data, user history data, energy usage data, or event log data. The training data 704 may be processed by the training models 706. Examples of the training models 706 include multilayer perceptron (MLP) models, convolutional neural networks (CNN), long short-term memory (LSTM) algorithms, generative adversarial networks (GAN), K-means clustering, Gaussian mixture models (GMM), or any other of a number of machine-learning training techniques known to a person of ordinary skill in the art. The training models 706 may comprise a single type of model or multiple types, as well as various combinations of types including combinations of single types and of multiple types.

The training models 706 may use supervised learning methods, where the training data 704 may be labeled and the outputs 708 may be graded based on their fidelity to a "truth" output. The training models 706 may use an unsupervised learning method, where there may not be labels on the training data 704 and the training models 706 may classify correlations without reference to a "truth" value. The training models 706 may combine supervised and unsupervised techniques. The input 704 may be from training data used to generate the ML model 710. The ML model 710 may be generated once the training of the ML model generator 702 is complete. The ML model 710 may be trained on a same device where the ML model 710 is stored or on at least one other device.

The ML model 710 may be trained to generate one or more correlations (e.g., the one or more correlations 606 of FIG. 6) based on home data (e.g., the home data 604 of FIG. 6). To generate the one or more correlations, the ML model 710 may generate one or more correlation values between two or more members of the home data (e.g., network-connected devices). The one or more correlation values may be based on a determined amount of correlation between the two or more members of the home data. By way of example, consider a smart motion sensor and a smart light. The smart motion sensor may have a high amount of correlation (e.g., similar correlation values) with the smart light due to the smart light automatically turning on when the smart motion sensor detects motion. In another example, consider a smart sprinkler system and a smart television. The smart sprinkler system and the smart television may have low correlation values to each other because the smart sprinkler system waters the lawn and the smart television handles media.

The ML model 710 may further compare the one or more correlation values to one or more threshold values. The one or more threshold values may be based on one or more of a data time, a data type, a data category, a data history, or a device type. The ML model 710 may also determine that at least two members of the home data exceed the one or more threshold values and may thereby generate a data subset including at the at least two members of the home data. The home action may then be based on at least the two members identified in the data subset, thereby narrowing down the volume of incoming data generated by all network-connected devices 102-130 of FIG. 1. Indeed, by pairing at least two members of the home environment 100 through this correlation-based approach, the proposed solution limits the latency and impact on resources to provide a home action output to the user. By way of example, consider the dog 138 of FIG. 1 in the home environment 100 of FIG. 1. The dog 138 may have been left outside by the first child 134. The ML model 710 can generate correlation values between motion sensors in the house, outdoor cameras, and an outdoor thermometer. Further the ML model 710 can compare the correlation values against a time threshold for the dog 138 being outside (e.g., 15 minutes or less) and a history threshold for when the first child 134 deals with the dog 138 (e.g., the first child 134 keeps the dog 138 outside for 5 minutes). Based on the fact that the outdoor camera detected that the dog 138 was outside for 35 minutes, the outdoor temperature is currently 93°F, and the motion sensors inside the house indicate the presence of the first child 134, the ML model 710 can determine that the correlation values of all the devices exceed the threshold values. Based on this indication, the ML model 710 can generate a data subset (e.g., an insight) to be configured for output to a user. The example insight (e.g., insights 502 of FIG. 5) may indicate to the user that the dog 138 has been outside for 35 minutes in 93°F heat. A potential action (e.g., the home action 608 of FIG. 6) derived from the insight may be asking the user if they want to open a garage door or unlock a pet door to let the dog 138 inside. The action may be further generated by the ML model 710 based on further correlation values compared to further threshold values (e.g., comparing the garage door opener correlation value to the rest of the devices).

In some examples, the ML model 710 can compare correlation values between devices that do not exceed a threshold. Consider the example above, but the ML model 710 generates correlation values between indoor motion sensors, outdoor camera, the outdoor thermometer, and a fridge door sensor. The fridge door sensor may indicate that the fridge door was opened around the same time the outdoor camera identified the dog 138. However, the fridge door sensor does not exceed any threshold values and is either loosely correlated or not correlated at all with the other devices, thereby the ML model 710 does not include the door-opening event in the data subset.

According to some examples, the generation of the correlation values and/or the comparison of the correlation values to the threshold values can allow for scalability of the ML model 710 for new devices, such as devices on which the ML model 710 was not trained (e.g., abilities of the new devices not used in the inputs 704). By way of example, again consider the home environment 100, but with a new device of a smart awning. The ML model 710 may never have been trained on a smart awning, but the smart awning, in this example, can have a high correlation value with the outdoor camera (e.g., the correlation score based on proximity of the devices, a grouping from the user or automatic grouping, etc.). The potential action may ask the user if they would like to deploy the smart awning based on the correlation value of the smart awning and/or comparison of the correlation value of the smart awning with the one or more threshold values. In this example, the action of deploying the smart awning may also be something the ML model 710 was not explicitly trained on, but the potential action can include this ability of the smart awning based on the correlation value and/or the threshold value comparison.

According to some examples, the generation of the action is based on one or more of the correlation values between devices, the comparison of the correlation values to the threshold values, action correlation values, and action threshold values. The action correlation values may be based on a determined amount of correlation between two or more of the available actions of the network-connected devices, categories of the available actions, categories of the network-connected devices, data of the network-connected devices, historical data, etc. The action threshold values may be used as comparison values for the action correlation values, for the categories of the available actions, etc. For example, consider the previously outlined scenario of the dog being left outside. The proximity of the dog to the garage door, coupled with the available action f the garage door opening, can be given a high action correlation value and/or exceed an action threshold. By contrast, the refrigerator 128 of FIG. 1 may have a very low correlation value, action correlation value, etc., which may in addition not exceed an action threshold value. It should be noted that the use of such values (action correlation value, action threshold value, etc.) allows for robust scalability with new devices and/or new device actions, some of which the ML model 710 has not been trained on.

The ML model 710 may be updated with additional training after it has been initially trained. In aspects, the ML model 710 may have the same structure before and after training but may have one or more different values, such as starting vs. final values for weights and biases. The ML model 710 may start with a different architecture prior to training, and in this way the generated ML model 710 may have architecture that is a product of the training done in the ML model generator 702.

By way of example, training for an ML model may be accomplished by incorporating a long short-term memory (LSTM) algorithm. The LSTM algorithm is a type of recurrent neural network (RNN), which may process data in a time-indexed fashion. The LSTM may solve a so-called "vanishing gradient problem," in which gradients used in fitting may tend to zero and, thus, may not yield useful fit parameters for a given model (e.g., weights and biases). During the training phase, the LSTM may allow for persistent gradients used to fit when the gradients may otherwise go to zero (e.g., in a traditional RNN). A person of ordinary skill in the art will understand that other configurations using the LSTM may also be equivalently used and that the example given here is meant to be illustrative and not limiting.

### Large Language Models (LLMs)

Generally, LLMs are a class of artificial intelligence (AI). LLMs are trained on enormous amounts of data to provide foundational capabilities, which can be used and reused, often through fine-tuning for particular applications and tasks. Other software applications, in contrast, are often built and trained on specific data for each use case. In this way, LLMs are considered a type of foundational model.

Some LLMs use an ML model that can parse language and provide context-aware outputs (e.g., to mimic a human response). This mimicry of a human response is typically to a prompt (e.g., from a user asking a question). An LLM can use a prompt "ask how to get to the train station in French," for example, to provide a translation service (e.g., a response in the French language to the English language prompt).

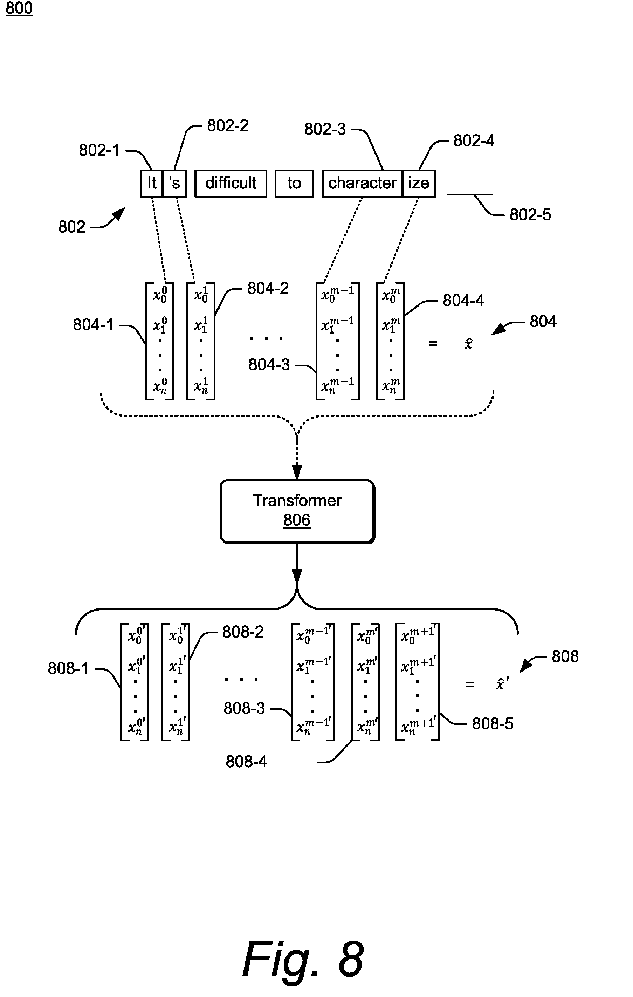

Consider FIG. 8, which illustrates a trainer 800 by which to train an LLM used for generating actionable insights from smart home event data. The trainer 800 receives training data as training inputs, such as an input 802. This training data may be of many different types, such as home automation and/or monitoring data. In the example illustrated by FIG. 8, the training input 802 is a phrase, though it may instead be a word, a long text passage (e.g., a book, article, or web-page), or any other data containing comprehensible text. In some examples, the text is from a screen or image capture. In a process called "tokenization," the trainer 800 breaks the training input 802 into tokens, marked as tokens 802-1, 802-2, 802-3, and 802-4. Here, the training input 802 has a missing next word, marked as a blank 802-5. The goal of the trainer 800 is to predict the blank 802-5.

The trainer 800 encodes the tokens (802-1, 802-2, etc.) into an input tensor *x̂* 804 through a mapping procedure. For instance, the token "It" 802-1 is mapped to a first component 804-1 of the input tensor *x̂* 804, the token "'s" 802-2 is mapped to a second component 804-2 of the input tensor *x̂* 804, the token "character" 802-3 is mapped to a third component 804-3 of the input tensor *x̂* 804, and the token "ize" 802-4 is mapped to a fourth component 804-4 of the input tensor *x̂* 804. Though the tokens "It" 804-1 and "'s" 804-2 are shown as two portions of the word "It's," other mapping schemes exist (e.g., a mapping based on discrete words or phonemes). An ML model or an ML component of the trainer 800 may perform the tokenization and/or mapping of the training input 802 into the input tensor *x̂* 804 (e.g., a feature-extracting convolutional neural network (CNN)). The mapping of the tokenized training input 802 into the input tensor *x̂* 804 may involve a lookup table, which maps each possible token (e.g., 802-1, 802-2, etc.) to a known tensor object in a language space of the training data.

A transformer 806 takes the input tensor *x̂* 804 as an input, with the goal of predicting the blank 802-5 by transforming the input tensor *x̂* 804 into a transformed tensor *x̂*' 808. The transformation process is mathematically represented as follows: $T \hat{x} = \hat{x} ′$ Eq. 1

Tin Eq. 1 represents the transformer 806. The transformed tensor *x̂*' 808 includes components 808-1, 808-2, 808-3, 808-4, and 808-5. The component 808-1 is a transformation of the component 804-1 by the transformer 806 (similar for component pairs 808-2/804-2, 808-3/804-3, and 808-4/804-4). The component 808-5 corresponds to the blank 802-5, and thus the component 808-5 is a prediction for a blank 804-5. The final transformed tensor *x̂*' 808 component 808-5 is derived as part of the transformation process in addition to the contextualization of the components 804-1 through 804-4.

Inputs (e.g., the input tensor *x̂* 804 and/or the training input 802) generally include multiple tokens. The training input 802 includes the tokens 802-1 through 802-4. The trainer 800 converts a single training input (e.g., the training input 802) into multiple training inputs. For example, by removing the token 802-4, the blank 802-5 shifts left as the training input 802 calls for the trainer 800 to predict the token 802-4, thus creating a new training input from the original training input 802. As the value for the token 802-4 is known in this example, the new input is a labeled input, which allows it to be used by a supervised ML training algorithm (an unsupervised ML training algorithm may also use such an input). In this way, a single text containing multiple tokens (e.g., a book, a research paper) is used as multiple training inputs for the trainer 800.

In some instances, it is desirable to guide an output of an LLM without fine-tuning the LLM. A programmer may wish to add the functionality of an already-trained LLM to an application via an application programming interface (API) call, including all of the up-to-date functionality of the LLM with no additional training or upkeep needed from the programmer. In such instances, the only avenue to guide the output of the LLM is the input prompt. Tailoring the input prompt to obtain a desired output is known as prompt engineering.

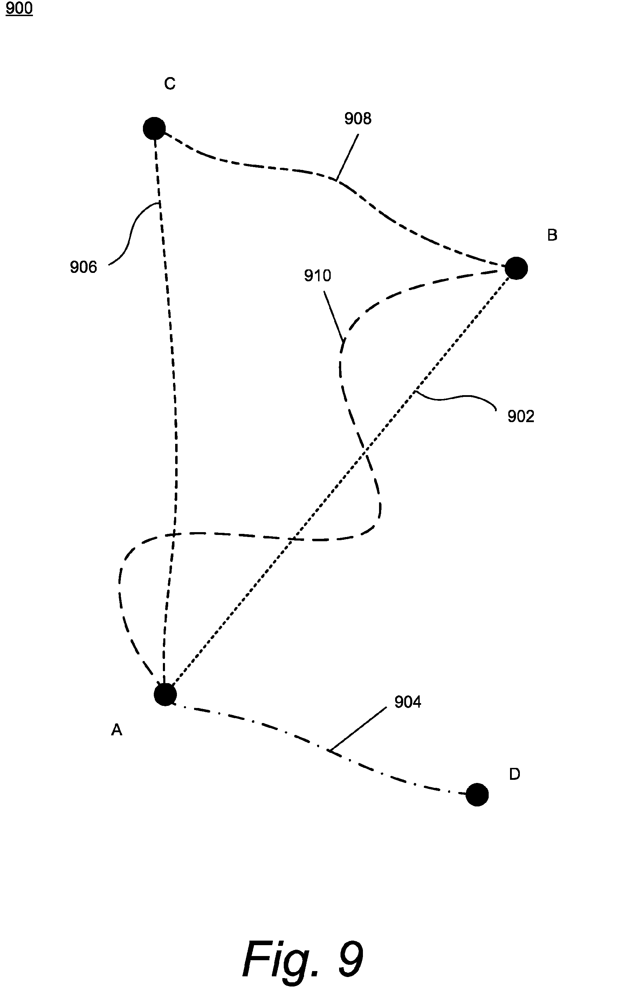

Consider FIG. 9, which illustrates a prompt engineering 900. An entry prompt A is an attempt to obtain a desired result B using an LLM. The LLM includes different computational avenues leading to results ("paths") based on a form of the entry prompt A. There may exist, at least in concept, an ideal path 902 leading from the entry prompt A to the desired result B in the most efficient manner possible. There are also other paths, such as a false path 904 leading to an undesired result D, an intermediate path 906 leading to an intermediary result C, another intermediate path 908 leading from the intermediate result C to the desired result B, and an inefficient path 910 leading from the entry prompt A to the desired result B. Many paths may exist, limited only by a scope of the LLM and a scope of the entry prompt A. The ideal path 902 may be expressed mathematically as follows: $S = \int L \left(φ,θ\left(φ\right),⋯\right) dφ$ Eq. 2

*S in* Eq. 2 represents the ideal path 902 and *L* represents the entry prompt A, which is characterized by a language space *φ* and a function *θ*(*φ*) for the path propagation in the language space *φ*. It may be difficult to distinguish the various paths 904-910 from the ideal path 902. In order to reach or reasonably approximate the ideal path 902, variations are made to the entry prompt *L* as follows: $\hat{S} = \int L \left(φ,θ\left(φ\right)+εη\left(φ\right)\right) dφ$ Eq. 3

*Ŝ* in Eq. 3 represents a path, which deviates from the ideal path 902 (S) by the function *η*(*φ*)*,* where *η*(*ε*) is characterized by the parameter *ε*. During the prompt engineering 900, various iterations of the entry prompt A are input into the LLM in an attempt to find an acceptable path. By way of example, a form of the entry prompt A does not reach the desired result B (e.g., the false path 904) and is discarded. Another form of the entry prompt A gives the intermediate path 906, arriving at the intermediate result C, and a subsequent prompt gives the intermediate path 908 from the intermediate result C to the desired result B. Though this prompt reaches the desired result B, multiple steps are taken, which is less efficient than a single, direct prompt. Another form of the entry prompt A gives the inefficient path 910, which arrives at the desired result B. Yet another form of the entry prompt A gives the ideal path 902 (or an acceptable approximation) to the desired result B. Characterization of variations in the form of the entry prompt A may be expressed mathematically as follows: $\frac{\partial \hat{S}}{\partial ε} \leq ψ$ Eq. 4

Eq. 4 illustrates the variation of a deviation $\frac{\partial \hat{S}}{\partial ε}$ of the path *Ŝ* by the parameter *ε*, with *ψ* being a maximum acceptable value. In an ideal scenario, *ψ* = 0. Consider an example where a user requests an application agent to make the user's house more energy efficient. The application agent may access the LLM and leverage the prompt engineering 900, having been trained with various forms of the input prompt A. Consider the prompt A having the form of "make my house more energy efficient." Suppose the LLM responds by turning off all smart devices, including essential systems such as a refrigerator and HVAC. The user may not have intended to fully disable critical appliances, and doing so may lead to discomfort or even spoilage of food. The LLM output may not be in line with the intent of the user in their entry of the prompt A. This example output from the LLM is represented by the undesired result D, which is not an acceptable path for the prompt engineering 900.

Consider another example of the above form of the prompt A where there is a follow-up step in a training of the application agent by automatic entering of another prompt of the form "adjust my energy usage based on my usual weekday schedule and turn off any unused devices in unoccupied rooms," resulting in the LLM dimming lights in unoccupied areas, adjusting a thermostat based on historical weekday patterns, and powering down idle entertainment systems. With the initial blanket shutdown of all devices represented by the intermediate result C, the resultant adjustments to usage patterns and occupancy-based optimization are represented by the desired result B. This process is represented by the additive paths 906+908. Though the desired result B is reached, the deviation $\frac{\partial \hat{S}}{\partial ε}$ may still be above the maximum acceptable value *ψ*, which may be due to a computation cost, an inability to enter multiple prompts, or other limitations.

Consider an example of the entry prompt A for an application agent instantiated within a smart home control interface, with the entry prompt A having the form "turn off the lights." Further consider the application agent parsing the entry prompt A, through training via prompt engineering, to have an updated form of "turn off the lights in rooms that are unoccupied, based on motion sensor data from the last fifteen minutes" (the updated entry prompt may be based on a knowledge of unsuccessful forms of the entry prompt A, forms of the entry prompt A used in prompt engineering in a training phase of the application agent, etc.). The LLM may return an executable code for use in the smart home, which deactivates lights in five rooms regardless of occupancy, causing inconvenience to the user when a room in use is mistakenly powered off. The deviation $\frac{\partial \hat{S}}{\partial ε}$ may again exceed the maximum acceptable value *ψ*, which is illustrated by the inefficient path 910. In a similar example, suppose the entry prompt A is reformatted by the application agent to the form "using recent motion data and the time of day, turn off lights only in unoccupied rooms and keep lights on in commonly used evening spaces like the kitchen and living room." The result may be a more nuanced response that aligns with the user's habits, reducing energy use while maintaining convenience, which results in the deviation $\frac{\partial \hat{S}}{\partial ε}$ value falling at or under the maximum acceptable value *ψ*, which is represented by the ideal path 902.

Each of the forms of the entry prompt A in the previous several examples may be used to train the application agent to parse the entry prompt A in order to reformat it in a way aligned with an intent of the entry prompt A. The prompt engineering 900 leverages the failed paths from all of the forms of the entry prompt A to arrive at an acceptably efficient and succinct prompt, which results in the desired result B. In some examples, the parsing of the entry prompt A in order to determine the intent may be done by the LLM. The LLM may also be used in the prompt engineering 900 to generate additional forms of the entry prompt A, to find follow-up prompts, to classify intents, or to perform other aspects of the prompt engineering 900.

In some examples, prompt engineering can be used as part of an overall LLM manipulation scheme. Consider retrieval-augmented generation (RAG). In examples using RAG, the LLM is not fine-tuned, but prompt engineering is used to incorporate new data (e.g., data not used to train the LLM). Though RAG can incorporate other mechanisms (e.g., code for information retrieval, synthesis graphing, etc.), prompt engineering is an integral part of RAG. Throughout this disclosure, the idea of prompt engineering is meant to encompass LLM manipulation methodologies that do not fine-tune the LLM.

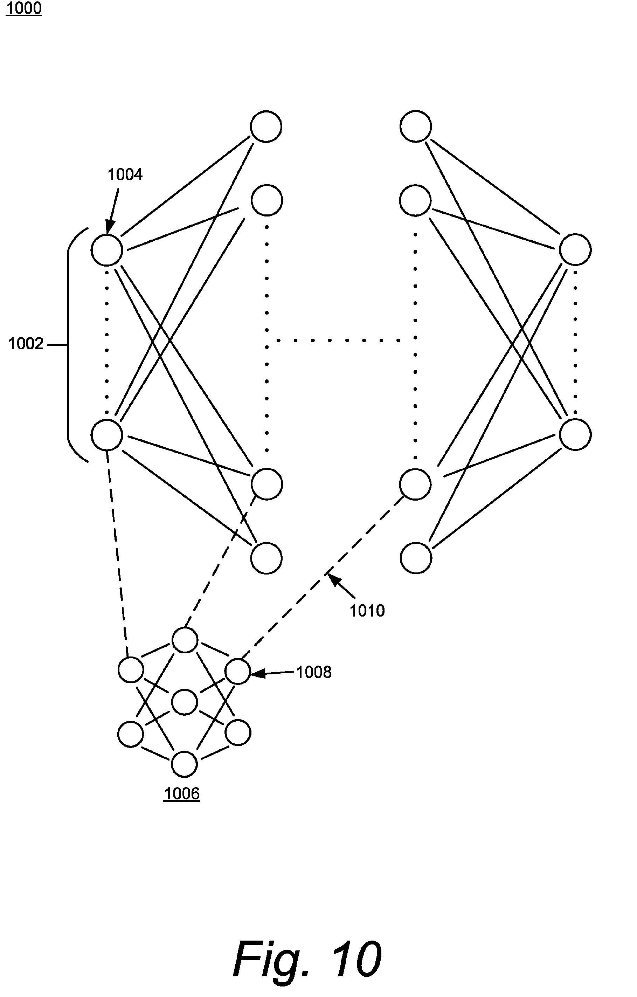

FIG. 10 illustrates an example low-rank adaptation (LoRA) training 1000 for an LLM 1002. The LoRA training 1000 can be used to fine-tune the LLM 1002. One advantage of the LoRA training 1000 is that not all parameters 1004 of the LLM 1002 are tuned, resulting in a much less computationally costly training than fine-tuning all parameters 1004 of the existing LLM 1002. In some examples, a LoRA may be generated to tailor the LLM 1002 to home automation and monitoring tasks, or a plurality of LoRAs can be generated, each for a specific home automation and/or monitoring application.

The LoRA training 1000 employs a training ML model 1006. The training ML model 1006 has LoRA weights 1008, which modify only some of the parameters 1004 of the LLM 1002 (indicated by the dashed lines 1010). The LLM 1002 can be represented as a matrix of pre-trained weights (e.g., by the trainer 800 of FIG. 8) *W_{m,n},* where *m* and *n* represent the dimensionality of the matrix *W_{m,n}.* In a full fine-tuning (FT) training, the matrix *W_{m,n}* is modified by a modification matrix *Δw_{m,n}*, which is a matrix also of dimension *m* × *n*. In examples where the LLM 1002 is large (e.g., hundreds of billions of parameters), the modification matrix *ΔW_{m,n}* is also large and can thus be intensive in both computational training resources and storage resources. In examples where multiple LLMs trained with FT are sought, the problem is compounded.

The LoRA training 1000 can greatly reduce the cost of the modification matrix *ΔW_{m,n}.* Consider the following equation: ${ΔW}_{m , n} = \left|{x}_{m , r}\right〉 \left〈{y}_{r , n}\right|$ Eq. 5

In Eq. 5, |*x_{m,r}*〉 is a matrix of dimension m × r and 〈*y_{r,n}*| is a matrix of dimension *r* × *n.* In the small limit, *r* = 1, making |*x_{m,r}*〉 and 〈*y_{r,n}*| contravariant and covariant vectors of rank 1, respectively. This can greatly reduce the dimensionality and thus the computational cost of FT compared with *ΔW_{m,n}* being stored and used as a dimensionality *m* × *n* matrix. Consider the LLM 1002 represented by *W_{m,n}* with *m = n* = 445,000, giving 198,025,000,000 total parameters. Using the LoRA training 1000, at the low end of *r* = 1, *ΔW_{m,n}* may be represented by two vectors, |*x_{m,r}*〉 and 〈*y_{r,n}*|*,* which have a dimension of only 445,000, resulting in a dimensionality reduction of: $\frac{\left[{ΔW}_{m , n}\right]}{\left[{W}_{m , n}\right]} ≅ 2.2472 ⋅ {10}^{- 6}$ Eq. 6

Eq. 6 shows an example of the modification matrix *ΔW_{m,n}* size being 0.00022472% the size of *W_{m,n}.* The result is, in some examples, an ability to FT train the LLM 1002 with a relatively small set of parameters (e.g., the LoRA weights 1008). In this way, FT LLMs based on the LLM 1002 may be created. If the LLM 1002 is a general LLM for home management and the general LLM for home management is at least in part a product of the LoRA training 1000, a plurality of specialized LLMs based on different aspects of home management can be easily stored on a user device (e.g., the user device 202). The specialized LLMs may include an appliance maintenance LLM that monitors smart device performance data, a routine automation LLM that personalizes and manages routines around the smart home, or a family coordination LLM that integrates calendar data across a household to manage household member schedules.

### Example Methods

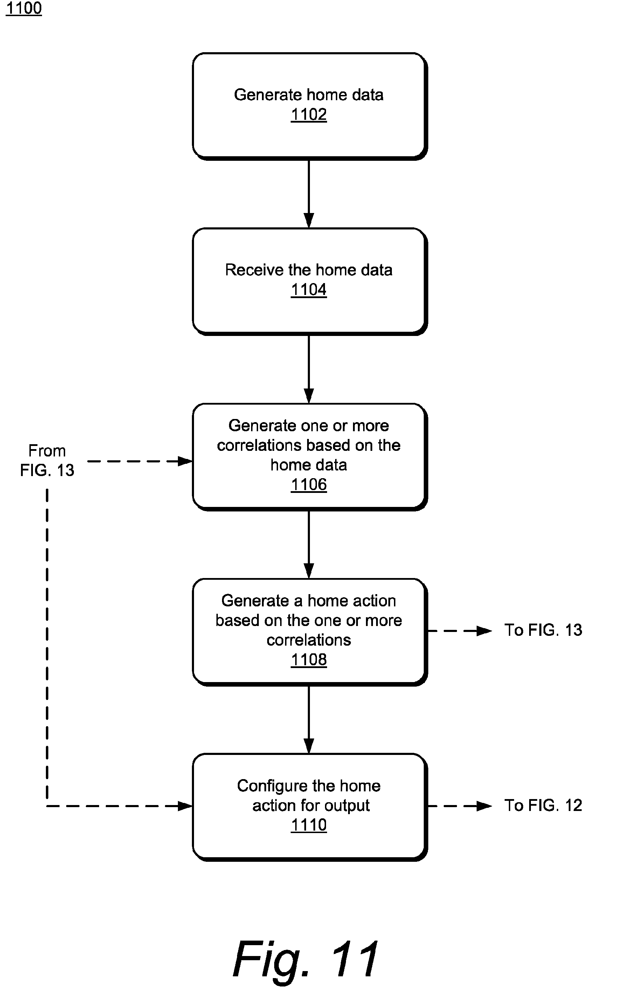

FIGS. 11, 12, and 13 depict example methods 1100, 1200, and 1300, respectively, for generating actionable insights from smart home event data. The methods 1100, 1200, and 1300 are shown as a set of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the environment 100 of FIG. 1 and entities detailed in FIGS. 1-10, reference to which is made for example only. The techniques are not limited to performance by one entity or multiple entities operating on one device.

FIG. 11 illustrates the example method 1100 for generating actionable insights from smart home event data. At 1102, home data (e.g., the home data 604 of FIG. 6) is generated by one or more home surveillance sensors. The one or more home surveillance sensors may include one or more of a smart doorbell, a smart door lock, a security camera, a motion sensor, a home hub, a wireless communication device, a smart thermostat, an alarm, a smart garage door opener, a smart smoke detector, a smart water monitor, a smart light, a smart plug, a smart switch, a smart appliance, a smart irrigation system, a smart speaker, a smart display, and a smart television. At 1104, the home data is received by an ML model (e.g., the ML model 602 of FIG.6). In aspects, the ML model is an LLM (e.g., the LLM 1002 of FIG. 10). The LLM may include one or more LoRA layers and may be trained, at least in part, using RAG. The ML model may also be stored in a memory (e.g., the memory 304 of FIG. 3) of a first device (e.g., the user device 202 of FIG. 2).

At 1106, one or more correlations (e.g., the one or more correlations 606 of FIG. 6) are generated by the ML model. The generation of the one or more correlations may be based on the home data. In examples, the one or more correlations include one or more of a time correlation, an object detection correlation, an event correlation, a home device state correlation, a weather correlation, a pattern correlation, a historical correlation, a category correlation, and an energy usage correlation. The generation of the one or more correlations may include one or more correlations between two or more of the home surveillance sensors. The ML model may further generate the one or more correlations through generating one or more correlation values between two or more members (e.g., devices) of the home data. The one or more correlation values may be based on a determined amount of correlation between the two or more members of the home data. The ML model may compare the one or more correlation values to one or more threshold values, which may be based on one or more of a data time, a data type, a data history, or a device type. If at least two of the two or more members of the home data exceed the one or more threshold values, the ML model can generate a data subset including the at least two of the two or more members of the home data.

At 1108, a home action (e.g., the home action 608 of FIG. 6) is generated. In some examples, the ML model generates the home action, and in others, one or more processors generate the home action. The generation of the home action may be based on the one or more correlations and may be further based on one or more device capabilities of one or more of the home surveillance sensors. In some examples, the generated home action includes a plurality of home actions. The generation of the home action is performed automatically or, in other examples, periodically. In some examples, the ML model generates the home action based on the data subset from the one or more correlation values. Further, the generation of the home action may include generating one or more action correlation values between two or more available actions of the one or more home surveillance sensors. The one or more action correlation values may be based on a determined amount of correlation between the two or more available actions. Additionally, at least one of the two or more available actions is a new action which the ML model has not been trained on. The generation of the home action may be further based on a comparison of the one or more action correlation values with one or more action threshold values. The ML model may generate the action correlation values.

At 1110, the home action is configured for output to a user (e.g., the user 204 of FIG. 2). In aspects, the home action is configured by one or more processors (e.g., the one or more processors 302 of FIG. 3). The one or more processors may be housed in a second device different than the first device, and the first device and second device may be in wireless communication. In some examples, the second device includes a mobile device (e.g., the user device 202 of FIG. 2) and the first device includes one of a cloud computer, a server, a home hub, or a wireless communication device. In other aspects, the ML model performs the configuration of the home action for output to the user.

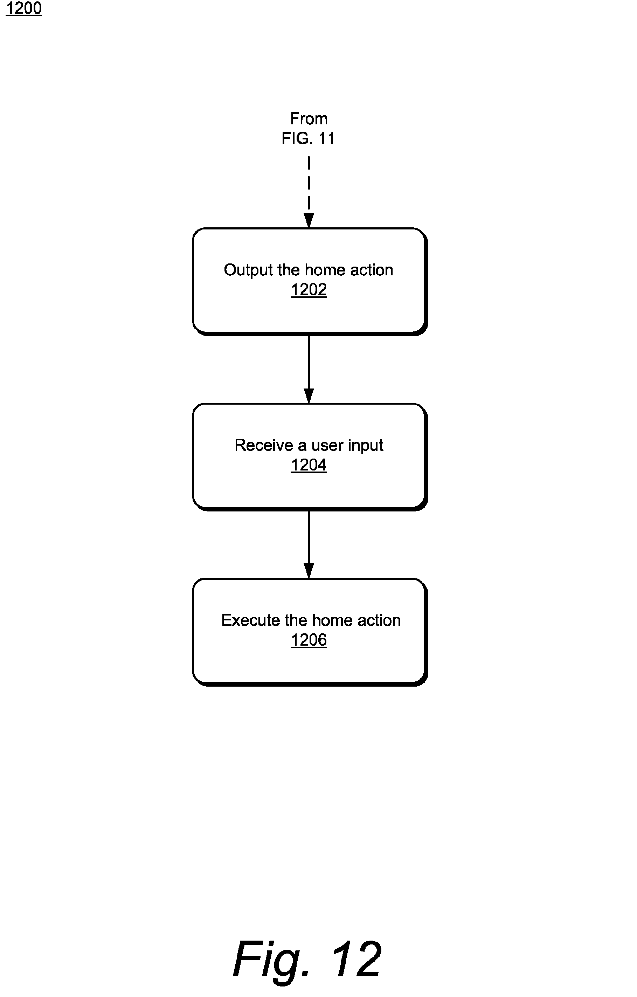

FIG. 12 illustrates the example method 1200 for generating actionable insights from smart home event data. The method 1200 includes the method 1100. At 1202, the home action is output to the user by the one or more processors. At 1204, a user input (e.g., the user input 610 of FIG. 6) is received by the one or more processors. The user input may include a request to execute the home action. At 1206, the home action is executed. The execution of the home action is performed by the ML model in some examples and by the one or more processors in other examples. In aspects, the execution of the home action includes activating the one or more device capabilities of the one or more of the home surveillance sensors.

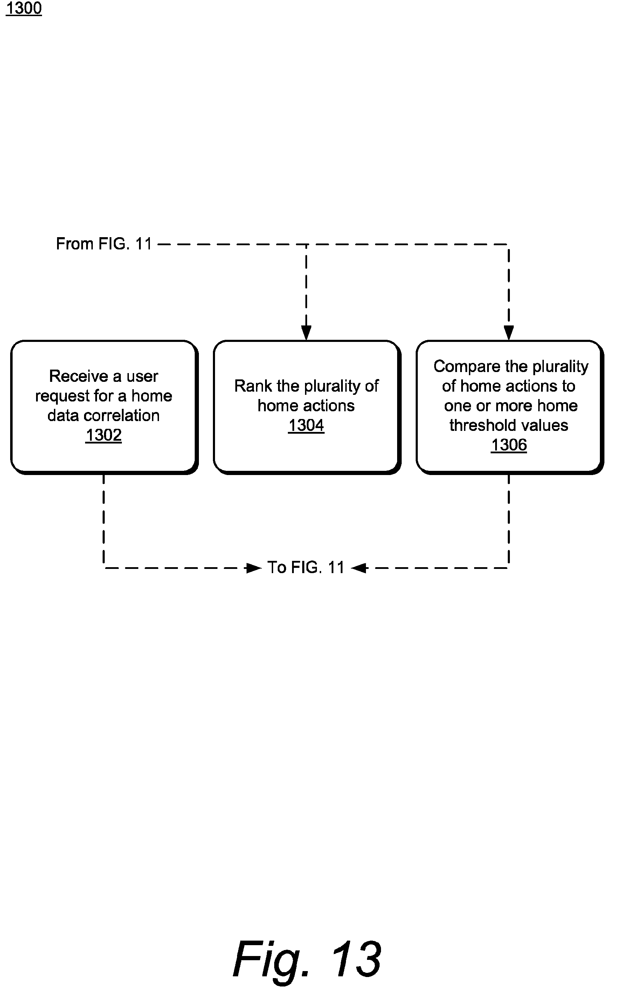

FIG. 13 illustrates the example method 1300 for generating actionable insights from smart home event data. The method 1300 includes the method 1100. At 1302, a user request for a home data correlation (e.g., the home action request 614 of FIG. 6) is received. In aspects, the generation of the one or more correlations (e.g., 1106 of FIG. 11) is responsive to the receipt of the user request for the home data correlation. At 1304, the generated home action includes the plurality of home actions, and the plurality of home actions is ranked. In some examples, the ML model performs the ranking of the plurality of home actions. In aspects, the configuration of the home action for output (e.g., 1110 of FIG. 11) is based on the ranking of the plurality of home actions. At 1306, the plurality of home actions is compared to one or more home threshold values. In aspects, the configuration of the home action for output is responsive to at least one of the plurality of home actions being greater than one or more of the one or more home threshold values.

### Additional Examples

Some additional examples are described below.

Example 1: A method for generating device actions, the method including generating, by one or more home surveillance sensors, home data. The method further includes receiving, by a machine-learned (ML) model, the home data and generating, by the ML model, one or more correlations based on the home data. The method further includes generating, based on the one or more correlations, a home action and configuring, by one or more processors, the home action for output to a user.

Example 2: The method of example 1, where the generating, by the ML model, of the one or more correlations based on the home data includes generating, by the ML model, one or more correlation values between two or more members of the home data, the one or more correlation values based on a determined amount of correlation between the two or more members of the home data. The generating of the one or more correlations further includes comparing, by the ML model, the one or more correlation values to one or more threshold values, determining, by the ML model, at least two of the two or more members of the home data exceed the one or more threshold values, and generating a data subset, which includes the at least two of the two or more members of the home data.

Example 3: The method of example 2, wherein the one or more threshold values are based on one or more of a data time, a data type, a data category, a data history, or a device type.

Example 4: The method of any one of the previous examples, wherein the generating of the home action is further based on one or more capabilities of the one or more home surveillance sensors.

Example 5: the method of example 4, wherein the generating of the home action is performed by the ML model, the ML model is trained, at least in part, with an ML training data set that includes a plurality of capabilities of a plurality of home surveillance devices, and at least one of the one or more capabilities of the one or more home surveillance sensors is not a member of the plurality of capabilities of the plurality of home surveillance devices.

Example 6: The method of any one of the previous examples, further including outputting, by the one or more processors, the home action to the user. The method further includes receiving, by the one or more processors, a user input including a request to execute the home action and executing the home action.

Example 7: The method of example 6, where the execution of the home action is performed by the one or more processors.

Example 8: The method of example 6, where the execution of the home action is performed by the ML model.

Example 9: The method of any one of examples 6 to 8, where the generation of the home action is further based on one or more device capabilities of one or more of the home surveillance sensors. The execution of the home action includes activating the one or more device capabilities of the one or more of the home surveillance sensors.

Example 10: The method of any one of the previous examples, where the one or more home surveillance sensors include one or more of a smart doorbell, a smart door lock, a security camera, a motion sensor, a home hub, a wireless communication device, a smart thermostat, an alarm, a smart garage door opener, a smart smoke detector, a smart water monitor, a smart light, a smart plug, a smart switch, a smart appliance, a smart irrigation system, a smart speaker, a smart display, and a smart television.

Example 11: The method of any one of the previous examples, where the configuration of the home action for output to the user is performed by the ML model.

Example 12: The method of example 1, where the generation of the home action is performed by the one or more processors.

Example 13: The method of any one of the previous examples, where the generated one or more correlations include one or more of a time correlation, an object detection correlation, an event correlation, a home device state correlation, a weather correlation, a pattern correlation, an historical correlation, a category correlation, and an energy usage correlation.

Example 14: The method of any one of the previous examples, further including receiving a user request for a home data correlation. The generation of the one or more correlations is responsive to the receipt of the user request for the home data correlation.

Example 15: The method of any one of the previous examples, where the ML model is a large language model (LLM).

Example 16: The method of example 15, where the LLM includes one or more low-rank adaptation (LoRA) layers.

Example 17: The method of example 15, where the LLM is trained, at least in part, using retrieval-augmented generation (RAG).

Example 18: The method of any one of the previous examples, where the generated home action includes a plurality of home actions.

Example 19: The method of example 18, further including ranking the plurality of home actions.

Example 20: The method of example 19, where the configuration of the home action for output is based on the ranking.

Example 21: The method of example 18, further including comparing the plurality of home actions to one or more home threshold values. The configuration of the home action for output is responsive to at least one of the plurality of home actions being greater than one or more of the one or more home threshold values.

Example 22: The method of any one of the previous examples, where the generation of the home action is performed automatically.

Example 23: The method of any one of the previous examples, where the generation of the home action is performed periodically.

Example 24: The method of any one of the previous examples, where the ML model is stored in a memory of a first device and the one or more processors are housed in a second device, the second device different than the first device. The first device and the second device are in wireless communication with one another.

Example 25: The method of example 24, where the second device includes a mobile device and the first device includes one of a cloud computer, a server, a home hub, or a wireless communication device.

Example 26: The method of any one of the previous examples, where the generating of the home action includes generating one or more action correlation values between two or more available actions of the one or more home surveillance sensors, the one or more action correlation values based on a determined amount of correlation between the two or more available actions.

Example 27: The method of example 26, further including comparing the one or more action correlation values with one or more action threshold values, where the generating of the home action is further based on the comparison.

Example 28: The method of any one of examples 26 and 27, where the generation of the home action is further based on the action correlation values.

Example 29: The method of any one of examples 26-28, where the action correlation values are generated by the ML model.

Example 30: The method of any one of examples 26-29, where at least one of the two or more available actions is a new action, which the ML model has not been trained on.

Example 31: The method of any one of the previous examples, further including generating, by the ML model and from the one or more correlations, an insight. The insight includes new information derived from the correlations that highlights patterns, behaviors, or data not immediately evident from the home data. The home action is generated based on the insight.

Example 32: An electronic device including one or more processors and a memory, the memory including instructions that, when accessed by the one or more processors, cause the one or more processors to perform the method of any one of examples 1-31.

Example 33: A non-transitory, computer-readable medium storing instructions that, when accessed by one or more processors, cause the one or more processors to perform the method of any one of examples 1-31.

Example 34: A computer programming product storing instructions that, when accessed by one or more processors, cause the one or more processors to perform the method of any one of examples 1-31.

### Conclusion

Although techniques directed at, and apparatuses including, generating actionable insights from smart home event data have been described in language specific to features and/or methods, it is to be understood that the subject of the appended claims is not necessarily limited to the specific features or methods described. Rather, the specific features and methods are disclosed as example implementations of generating actionable insights from smart home event data.

## Claims

1. A method for generating device actions, the method comprising:
generating, by one or more home surveillance sensors, home data;
receiving, by a machine-learned (ML) model, the home data;
generating, by the ML model, one or more correlations based on the home data;
generating, based on the one or more correlations, a home action; and
configuring, by one or more processors, the home action for output to a user.

2. The method of claim 1, wherein the generating, by the ML model, of the one or more correlations based on the home data comprises:
generating, by the ML model, one or more correlation values between two or more members of the home data, the one or more correlation values based on a determined amount of correlation between the two or more members of the home data;
comparing, by the ML model, the one or more correlation values to one or more threshold values;
determining, by the ML model, at least two of the two or more members of the home data exceed the one or more threshold values; and
generating a data subset, which includes the at least two of the two or more members of the home data.

3. The method of any one of the previous claims, wherein the generating of the home action is further based on one or more capabilities of the one or more home surveillance sensors.

4. The method of any one of the previous claims, further comprising:
outputting, by the one or more processors, the home action to the user;
receiving, by the one or more processors, a user input comprising a request to execute the home action; and
executing the home action.

5. The method of claim 4, wherein the execution of the home action is performed by the ML model.

6. The method of any one of the previous claims, wherein:
the generation of the home action is further based on one or more device capabilities of one or more of the home surveillance sensors; and
the execution of the home action comprises activating the one or more device capabilities of the one or more of the home surveillance sensors.

7. The method of any one of the previous claims, wherein the generation of the home action is performed by the ML model.

8. The method of any one of the previous claims, wherein the generated one or more correlations comprise one or more of a time correlation, an object detection correlation, an event correlation, a home device state correlation, a weather correlation, a pattern correlation, an historical correlation, a category correlation, and an energy usage correlation.

9. The method of any one of the previous claims, further comprising receiving a user request for a home data correlation, wherein the generation of the one or more correlations is responsive to the receipt of the user request for the home data correlation.

10. The method of any one of the previous claims, wherein the ML model is a large language model (LLM).

11. The method of any one of the previous claims, wherein the generated home action comprises a plurality of home actions.

12. The method of claim 11, further comprising comparing the plurality of home actions to one or more home threshold values, wherein the configuration of the home action for output is responsive to at least one of the plurality of home actions being greater than one or more of the one or more home threshold values.

13. The method of any one of the previous claims, further comprising generating, by the ML model and from the one or more correlations, an insight, wherein:
the insight comprises new information derived from the correlations that highlights patterns, behaviors, or data not immediately evident from the home data; and
the home action is generated based on the insight.

14. An electronic device including one or more processors and a memory, the memory including instructions that, when accessed by the one or more processors, cause the one or more processors to perform the method of any one of claims 1-13.

15. A non-transitory, computer-readable medium storing instructions that, when accessed by one or more processors, cause the one or more processors to perform the method of any one of claims 1-13.
